# EUROPEAN PATENT SPECIFICATION

(11) **EP 1 907 328 B1**
(45) Date of publication and mention of the grant of the patent: **07.10.2015**
(21) Application number: 06769490.1
(22) Date of filing: 24.07.2006
(51) Int. Cl.: C02F 11/12, F26B 3/00

(54) **METHOD OF DRYING SLUDGES**
VERFAHREN ZUM TROCKNEN VON SCHLAMMEN
PROCEDE DE DESHYDRATATION DE BOUES

(30) Priority: 25.07.2005 NZ 54142605
(43) Date of publication of application: 09.04.2008
(73) Proprietor: Flo-Dry Engineering Limited, Auckland (NZ)
(72) Inventor: FERNANDO, Tissa, Auckland, 0622 (NZ); KURVINK, Michael, Robert, Auckland, 0627 (NZ)
(74) Representative: Hocking, Adrian Niall
(86) International application number: PCT/NZ2006/000187
(87) International publication number: WO 2007/013819

(56) References cited:
- EP-A1- 0 559 012
- DE-A1- 3 312 145
- DE-A1- 19 825 597
- GB-A- 2 351 283
- US-A- 2 350 209
- US-A- 4 768 292
- US-A- 5 305 533
- US-A- 5 373 647

## Description

### TECHNICAL FIELD OF THE INVENTION

This invention relates to a method of drying sludges. Such sludges may comprise semi-solids, sludges and slurries consisting of treated or untreated sewage, or other biological waste material. Such liquids are usually water but are not exclusively so. Wherever mentioned, the phrase 'pasty materials' is equivalent to 'sludge'.

### BACKGROUND ART

Sludges such as sewage sludges, for example, from municipal corporations, sludges from industrial plants such as pulp and paper plants, food processing plants, rendering plants, and waste treatment processes such as dissolved air flotation systems, anaerobic digestion, extended aeration and chemical beneficiation processes may contain a solids content from about 1% to 5%. Typically such sludges are subject to a dewatering process, for example, by mechanical filtering, centrifuging or pressing, to produce sludges that are largely free of free moisture. However, the resulting sludge, which is left with essentially bound water, still has a substantial water content. In such sludges the dry solids content may be about 12% to 30%. In order to produce a stable product that is free of pathogens and which can be transported it is desirable to reduce the moisture content of such sludges to below 10%.

DE-A-198,25,597 and US-A-5,373,647 disclose drying of materials. US-A-2,350,209 disclose drying of plant material such as kelp. US-4768292 discloses a method and apparatus for drying sewage sludge. GB-2351283 discloses a method of treating waste material.

### OBJECT OF THE INVENTION

It is therefore an object of the present invention to provide a method of drying pasty materials which will go at least someway towards meeting the foregoing requirements in a simple yet effective manner or which will at least provide the public with a useful choice.

### STATEMENT OF THE INVENTION

In a first aspect, the invention provides a method of drying a sludge, comprising the steps of subjecting the sludge to a first drying stage at a first temperature in a rotary dryer, and then subjecting the partially dried sludge to a second drying stage at a second temperature, the second temperature being lower than the first temperature, the second drying stage being effected to the partially dried sludge on a moving bed dryer, characterised by comminuting the sludge between the first and second drying stages, beginning the first drying stage whilst the sludge is relatively wet, and terminating it before the sludge substantially agglomerates, the first drying stage drying the sludge to 40% to 60% dry solids by weight, and being also a heat sterilisation process wherein the core of the sludge is heated to at least 100°C.

Other aspects and features are described and shown in the dependent claims, description and drawings.

To those skilled in the art to which the invention relates, many changes in construction and widely differing embodiments and applications of the invention will suggest themselves without departing from the scope of the invention as defined in the appended claims. The disclosures and the description herein are purely illustrative and are not intended to be in any sense limiting.

### BRIEF DESCRIPTION OF THE DRAWINGS

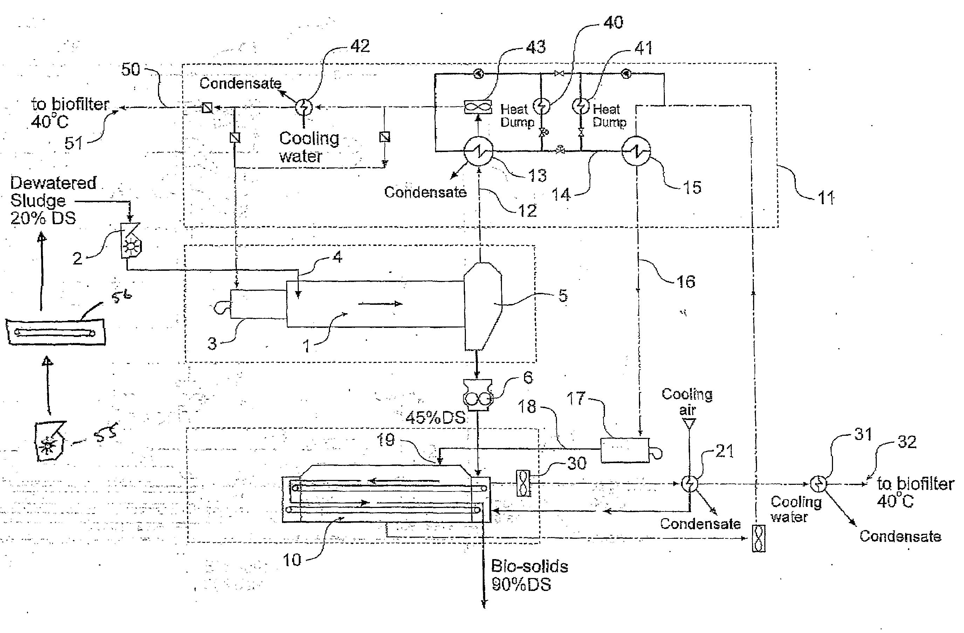

One preferred form of the invention will now be described with reference to the accompanying drawing which is a diagrammatic representation of an apparatus suitable for a carrying out a method of drying a sludge according to one preferred form of the invention and illustrating a method of drying a sludge according to one preferred form of the invention.

### BEST MODE FOR CARRYING OUT THE INVENTION

Referring to the drawings pasty material such as dewatered sludge having a dry solids content, for example about 20% DS (dry solids) by weight is input into a first dryer 1. If desired or necessary the dewatered sludge may be passed through a first communiter 2 prior to entering the first dryer. The communiter 2 typically breaks up lumps of material greater than 15mm to a size range of particles of 10mm to 20mm. Essentially the communiter 2 shreds the material to produce uniform discreet particulates for provision, to the first dryer 1. Alternatively, communiter 2 can be an extruder.

The first dryer which may be a single or multi pass dryer, is a dryer capable of being run at a first higher temperature and is a rotary dryer particularly a drum dryer. The dryer includes a heater 3 which is capable of raising the temperature of the dewatered sludge to a desired core temperature of at least 100°C, and even more preferably about 180°C so that pathogens are quickly substantially eliminated by the heating process.

In the preferred form of rotary dryer 1 a single pass rotary drum drier is provided which is able to operate with air/feed product ratios that are lower than those of conventional rotary drum dryers. The dryer is designed with internal baffles and lifters and the drum is set at an optimum angle of tilt, to ensure the drying in the dryer is carried out in an energy efficient manner and such that heat loss in the exhaust gases are minimised. Such a dryer is available from the applicant and is known as a Flo-Dry Rotary Dryer.

In the first dryer 1 the particulates are dried to 40% to 60% dry solids by weight in the first dryer 1 so that the product does not substantially agglomerate or ball up into lumps. Any lumps formed in the first dryer 1 will be usually no more than 20mm in diameter. The energy input to first dryer 1 can be by a direct fire burner using such fuels as Natural Gas, LPG, Petroleum Dryer base liquid fuel, bio-gas from digesters, hot exhaust gases from engines producing electricity or from pulverized fuel burners using solid fuel including the final dried sludge output from the present invention.

The inlet temperature of the hot air and combusting gases are desirably in the range of 300°C to 800°C which temperatures are substantially higher than temperatures used in prior art dryers. Such temperatures not only reduce the amount of air used in the drying process but also sterilise the sludge to meet the requirements of USEPA 503A standards or better.

In the preferred form of the invention the product on entering the feeding in end 4 of the first dryer 1 is heated by the hot gases to rapidly reach a core temperature in the range of 100°C to 180°C (preferably about 180°C) and these temperatures are held for a sufficient time to be equivalent of the conventional sterilisation process which requires holding the final dried product at 80°C to 90°C for several minutes and to exceed the current pathogen reduction requirements of the USDA, E.U., and the New Zealand Ministry of the Environment requirements.

The high inlet temperature to the first dryer enables the core temperature of the product to be rapidly reached. The time needed for substantially complete killing of pathogens is in the order of seconds when the core, temperature is in the range of 100°C to 180°C. One reason for the rapid increase in core temperature is that the sterilisation step is carried out at the beginning of the procedure when the moisture content of the sludge is high, for example, around 70% to 88%. This high moisture content has the effect of increasing the heat transfer characteristics of thermal conductivity, specific heat, and the overall heat transfer into the core of the product enabling the product to be heated up to, in the preferred embodiment, 180°C without damaging the organic heat labile properties of the sludge and also without risk of explosion.

At the feed end 4 of the first dryer 1 the high moisture content substantially prevents dust formation and over heating of the product as the heat applied to the product is substantially utilised in evaporating the water from the sludge.

In prior-art constructions heat sterilisation is applied at the end of the process when the moisture content is typically below 15% by weight and may be as low as 10% by weight. In these circumstances heating even to 80°C at this low moisture content can produce dust with an attendant risk of explosion. The use of the high inlet temperature in first dryer 1 means that the amount of air used in the first dryer 1 is reduced significantly which reduces the absolute oxygen content inside the first dryer 1 again leading to less explosive conditions and furthermore the reduced air reduces the size of the drying and associated equipment such as ducts, fans, and the heat exchange equipment.

Product exiting the outlet end 5 of the first dryer 1 may be fed to a further comminuter 6 which again breaks up any large lumps of particulates to a typical size of 5mm to 15mm. One or two slowly rotating shafts (for example 3 to 30 rpm) on which cutters or blades are mounted may be provided in the communiter 6. For some sludges the comminuter 6 may be replaced by an extruder which would produce uniform strings of material which could be cut to a selected length of product. Typically the particle size in such a case would be around 2mm to 8mm in diameter and 5mm to 20mm long.

Accordingly, the product discharge from the comminuter 6 is substantially uniformly sized.

The output product from the communiter 6 is provided to a second dryer 10 which again may be single or multipass. The second dryer 10 operates at a lower temperature than the first dryer and the second dryer 10 is also of a non agglomerating type. More precisely, the second dryer is a moving bed dryer, such as a belt dryer. The belt dryer may be heated by hot air, the air being in the range of 30°C to 150°C and the second dryer 10 is of sufficient length so that the sludge at the output of the second dryer 10 has a dry solids content desirably of 90% to 95%. The temperature in the second dryer is selected to be sufficiently low to exclude or at least minimise the risk of dust explosion.

In a preferred form of the invention the heat energy for the second dryer 10 is supplied from the heat content in the evaporated water and gases from the dryer 1 which can be condensed and/or cooled in a heat exchanger system 11 to produce hot water at around 35°C to 95°C. If desired the heat content in the evaporated water and gases from the dryer 1 may be heat exchanged with air to produce the hot air necessary for the second dryer 10. Accordingly, gases at about 100°C are provided at line 12 where it passes through a heat exchange of 13 to provide water at, for example about 80°C at 14. The heat exchanger 15 provides gases at say 70°C at 16 and if necessary a supplementary or makeup air heater 17 is provided to provide gases at around 90°C at 18 to be input to dryer 10 at 19. The product discharged from second dryer 10 is cooled to around 40°C to 50°C in a cooling section within or outside the second dryer 10. Cooling air from the atmosphere at, for example 5°C to 30°C may be heat exchanged in an air heat exchanger 21 and used to cool the final dry product.

This use of fans, condensers and heat pumps allows heat energy to be conserved. An ID fan 30 may be provided to enable humid exhaust air from the second dryer 10 which is around 40°C to 105°C to be passed through an air/water condenser 31, and the cooler dehumidified air is finally treated in a bio-filter, or any other odour treating device if desired, indicated at 32 so as to reduce any odour in the discharged gases.

Part of the exhaust gas from second dryer 10 is heated in the air/water heat exchanger 15 and reused in the second dryer 10. The exhaust vapour and gases from the dryer 1 are passed through a condenser 13 which is an air/water heat exchanger and the dehumidified air is used as an air input to the first dryer 1. Other heat exchange devices such as heat pumps 40 and 41, and heat exchanger 42, as well as ID fan 43 are used to balance the thermal recovery system indicated generally at 11. The final exhaust from first dryer 1 at 50, is sent to a bio-filter indicated at 51.

For some sludges it can be advantageous to pre-break the wet sludge from the dewatering process into discrete particles of about 25 to 50mm in a communiter 55.

This can then be pre-heated in heater 56 which could be a conveying belt dryer utilising recovered heat from the downstream drying process. Other forms of heating such as infra-red, microwave, or electrical. The aim is to heat the outside of the pre-broken particles to form a crust to minimise or prevent balling up of difficult sludges, which could otherwise occur in the communiter 2 or dryer 1. This minimises the creation of dust which may be as low as 1% of the weight of the input wet sludge. This pre-heating forms a crust over at least part, and preferably All, of the surface of each sludge piece.

Thus it can be seen that a method for drying pasty materials and/or apparatus for drying pasty materials is provided which at least in the preferred form of the invention has the advantage that the pasty materials may be dried in an efficient manner to reduce energy consumption, to minimise the risk of agglomeration of the pasty materials during drying so as to minimise maintenance requirements and which also minimises the risk of, in particular, dust explosion. The construction is space and energy efficient whilst maintaining efficiency for maintenance.

As the dried product does not need to be recycled there is a reduction in energy requirements and no recycle pathway, of product being dried, is required, thereby allowing a reduction in the "footprint" of the operations.

Energy requirements can be minimised by using heat exhausted from the first drying stage. It is believed that significant thermal and electrical energy consumption reduction can be achieved when compared to existing systems.

Providing high heat input at the beginning of the process enables relevant standards to be met.

The process also produces a granular substantially dust free product.

## Claims

1. A method of drying a sludge, comprising the steps of subjecting the sludge to a first drying stage at a first temperature in a rotary dryer (1), and then subjecting the partially dried sludge to a second drying stage at a second temperature, the second temperature being lower than the first temperature, the second drying stage being effected to the partially dried sludge on a moving bed dryer (10),
**characterised by** comminuting (6) the sludge between the first and second drying stages, beginning the first drying stage whilst the sludge is relatively wet, and terminating it before the sludge substantially agglomerates, the first drying stage drying the sludge to 40% to 60% dry solids by weight, and being also a heat sterilisation process wherein the core of the sludge is heated to at least 100°C.

2. A method as claimed in Claim 1, wherein the rotary dryer is a drum dryer (1).

3. A method as claimed in any one of the preceding claims, wherein said first drying stage heats the core temperature of the sludge to 180°C.

4. A method as claimed in any one of the preceding claims, further including the further step of dividing the sludge into pieces and partially drying the pieces prior to the first drying stage.

5. A method as claimed in any one of the preceding claims, wherein the moisture content of the sludge at the beginning of the first drying stage is in the range 70% to 88% by weight.

6. A method as claimed in Claim 1, wherein the sludge is broken into pieces and partially dried prior to the first drying stage to form a crust at least partially over each piece prior to further processing of the sludge.

7. A method as claimed in anyone of the preceding claims, wherein the heat energy for the second dryer is at least partially supplied from the heat content in the exhaust vapour and gases from the first dryer.

8. A method as claimed in any one of the preceding claims, wherein said second temperature is below the explosion limits of the sludge as drying or when dried on the moving bed dryer (10).

## Patentansprüche

1. Verfahren zum Trocknen von Schlamm,
umfassend die Schritte, den Schlamm einer ersten Trocknungsstufe bei einer ersten Temperatur in einem rotierenden Trockner (1) auszusetzen und dann den teilweise getrockneten Schlamm einer zweiten Trocknungsstufe bei einer zweiten Temperatur auszusetzen, wobei die zweite Temperatur niedriger als die erste Temperatur ist, wobei die zweite Trocknungsstufe auf einem Wanderbetttrockner (10) am teilweise getrockneten Schlamm vorgenommen wird,
**gekennzeichnet durch** das Zerkleinern (6) des Schlamms zwischen der ersten und zweiten Trocknungsstufe, das Beginnen der ersten Trocknungsstufe, während der Schlamm relativ nass ist, und das Beenden der Stufe, bevor der Schlamm wesentlich agglomeriert, wobei die erste Trocknungsstufe den Schlamm zu 40 Gew.-% bis 60 Gew.-% Trockensubstanz trocknet, und auch ein Wärmesterilisationsverfahren ist, wobei der Kern des Schlamms auf mindestens 100° C erwärmt wird.

2. Verfahren nach Anspruch 1, wobei der rotierende Trockner ein Trommeltrockner (1) ist.

3. Verfahren nach einem der vorhergehenden Ansprüche, wobei die erste Trocknungsstufe die Kerntemperatur des Schlamms auf 180° C erwärmt.

4. Verfahren nach einem der vorhergehenden Ansprüche, weiter umfassend den weiteren Schritt, den Schlamm vor der ersten Trocknungsstufe in Stücke zu teilen und die Stücke teilweise zu trocknen.

5. Verfahren nach einem der vorhergehenden Ansprüche, wobei der Feuchtigkeitsgehalt des Schlamms zu Beginn der ersten Trocknungsstufe in der Spanne von 70 Gew.-% bis 88 Gew.-% liegt.

6. Verfahren nach Anspruch 1, wobei der Schlamm vor der ersten Trocknungsstufe in Stücke zerbrochen und teilweise getrocknet wird, um vor der Weiterverarbeitung des Schlamms zumindest teilweise um jedes Stück eine Kruste zu bilden.

7. Verfahren nach einem der vorhergehenden Ansprüche, wobei die Wärmeenergie für den zweiten Trockner zumindest teilweise von dem Wärmegehalt im Brüden und in den Abgasen des ersten Trockners geliefert wird.

8. Verfahren nach einem der vorhergehenden Ansprüche, wobei die zweite Temperatur unterhalb der Explosionsgrenze des Schlamms ist, während dieser auf dem Wanderbetttrockner (10) trocknet oder getrocknet ist.

## Revendications

1. Procédé de séchage d'une boue comprenant les étapes de soumettre la boue à une première étape de séchage à une première température dans un sécheur rotatif (1), puis à soumettre la boue partiellement séchée à une deuxième étape de séchage à une deuxième température, la deuxième température étant inférieure à la première température, la deuxième étape de séchage étant effectuée sur la boue partiellement séchée sur sécheur à lit entraîné,
**caractérisé par** le morcellement (6) de la boue entre la première et la deuxième étape, débutant la première étape de séchage alors que la boue est relativement humide, et la terminant avant que la boue se soit substantiellement agglomérée, la première étape séchant la boue à de 40% à 60% de solides secs en poids, et étant aussi un procédé de stérilisation thermique, dans laquelle le coeur de la boue est chauffé à au moins 100°C.

2. Procédé selon la revendication 1, dans lequel le sécheur rotatif est un sécheur à tambour (1).

3. Procédé selon l'une quelconque des revendications précédentes, dans lequel ladite première étape de séchage chauffe le coeur de la boue à une température de 180°C.

4. Procédé selon l'une quelconque des revendications précédentes, incluant en outre l'étape supplémentaire de division de la boue en morceaux et de séchage partiel des morceaux avant la première étape de séchage.

5. Procédé selon l'une quelconque des revendications précédentes, dans lequel la teneur en humidité de la boue au début de la première étape de séchage est dans la gamme de 70% à 88% en poids.

6. Procédé selon la revendication 1, dans lequel la boue est morcelée puis partiellement séchée avant la première étape de séchage pour former une croûte au moins partiellement sur chaque morceau avant tout autre traitement de la boue.

7. Procédé selon l'une quelconque des revendications précédentes, dans lequel l'énergie thermique pour le deuxième sécheur est au moins partiellement fournie par le contenu calorifique de la vapeur d'échappement et les gaz du premier sécheur.

8. Procédé selon l'une quelconque des revendications précédentes, dans lequel ladite deuxième température est inférieure aux limites d'explosion de la boue pendant le séchage ou quand elle est sèche sur le sécheur à lit entraîné (10).
